Europäisches Patentamt

European Patent Office

Office européen des brevets

(11) Publication number: **0 286 196 B1**

## EUROPEAN PATENT SPECIFICATION

(45) Date of publication of patent specification: **25.03.92** (51) Int. Cl.⁵: **C07F 9/50**

(21) Application number: **88200669.5**

(22) Date of filing: **07.04.88**

(54) **Preparation of substituted diaryl phosphides.**

(30) Priority: **08.04.87 NL 8700822**

(43) Date of publication of application:
**12.10.88 Bulletin 88/41**

(45) Publication of the grant of the patent:
**25.03.92 Bulletin 92/13**

(84) Designated Contracting States:
**AT BE CH DE ES FR GB GR IT LI NL SE**

(56) References cited:
**EP-A- 257 663**
**AU-B- 87 240**
**DE-A- 2 831 525**

**CHEMICAL ABSTRACTS; VOL. 103, no. 21, 25th November 1985, page 690, column 2, abstract no. 178342w, Columbus, Ohio, US; T. CHOU et al.: "Ultrasound in phosphine preparation. Simple preparations of some bis(alkylphenylphosphino)alkanes", & J. ORG. CHEM. 1985, 50(22), 4329-4332**

**CHEMICAL ABSTRACTS, vol. 103, no. 11, 16th September 1985, page 619, column 2, abstract no. 87982p, Columbus, Ohio, US; T.S. CHOU et al.: "Ultrasonic acceleration of the reductive cleavage of phosphorus-carbon**

**bonds with lithium metal. A simple preparation of tertiary phosphines", " J. CHEM. RES., SYNOP. 1985, (1), 18-19**

**THE JOURNAL OF ORGANIC CHEMISTRY, vol. 50, no. 22, 1st November 1985, pages 4329-432; T. CHOU et al.: "Ultrasound in phosphine preparation. Simple preparations of some Bis (alkylphenylphosphino)alkanes"**

(73) Proprietor: **SHELL INTERNATIONALE RE-SEARCH MAATSCHAPPIJ B.V.**
**Carel van Bylandtlaan 30**
**NL-2596 HR Den Haag(NL)**

(72) Inventor: **van Doorn, Johannes Adrianus**
**Badhuisweg 3**
**NL-1031 CW Amsterdam(NL)**
Inventor: **Meijboom, Nicolaas**
**Badhuisweg 3**
**NL-1031 CW Amsterdam(NL)**
Inventor: **Wife, Richard Lewin**
**Badhuisweg 3**
**NL-1031 CW Amsterdam(NL)**

## Description

The invention relates to a process for the preparation of substituted diaryl phosphides which are eligible for use as starting materials in the preparation of tetraaryl diphosphines. The latter compounds find use as components in catalyst compositions intended for the preparation of polymers of carbon monoxide with one or more olefinically unsaturated compounds.

High molecular weight linear polymers of carbon monoxide with one or more olefinically unsaturated compounds (for the sake of brevity referred to as A) in which the monomer units occur in alternating order and which polymers therefore consist of units of the general formula -CO-(A')-, wherein A' represents a monomer unit derived from a monomer A used, can be prepared by using catalyst compositions based upon:
    a) a palladium compound,
    b) an anion of an acid with a pKa of less than 6, and
    c) a tetraaryl diphosphine of the general formula $R_1R_2P-R-PR_3R_4$, wherein $R_1$-$R_4$ represent similar or different aromatic hydrocarbon groups and R ia a bivalent bridging group containing at least three carbon atoms in the bridge.

Very suitable for use as the component c) in the catalyst compositions are diphosphines in which the groups $R_1$, $R_2$, $R_3$ and $R_4$ are similar to one another and which therefore can be represented by the general formula $(R_1)_2P-R-P(R_1)_2$. The preparation of the latter diphosphines can be carried out either by the reaction of an alkali metal diaryl phosphide $(R_1)_2PM$ with a dihalo compound X-R-X, or by the reaction of an aryl alkali metal compound $R_1M$ with a tetrahalodiphosphine $X_2P-R-PX_2$. For instance, 1,3-bis(diphenyl-phosphino)-propane can be prepared either by the reaction of $(C_6H_5)_2PNa$ with Cl-$(CH_2)_3$-Cl, or by the reaction of $C_6H_5Li$ with $Cl_2P-(CH_2)_3$-$PCl_2$. In view of the simplicity of the one-stage synthesis leading to the phosphorus-containing starting material for the first method of preparation, viz. by reaction in liquid ammonia of an alkali metal M with a triaryl phosphine $(R_1)_3P$, and the very cumbersome multi-stage synthesis to the phosphorus-containing starting material for the second method of preparation, the first method of preparation is much to be preferred.

In the past, the Applicant has carried out an investigation into the above catalyst compositions. This investigation has shown that their performance can be considerably enhanced by the incorporation, as the component b), of a diphosphine of the general formula $R_5R_6P-R-PR_7R_8$, wherein $R_5$, $R_6$, $R_7$ and $R_8$ represent similar or different aromatic hydrocarbon groups which may or may not be substituted with polar groups, provided that at least one of groups $R_5$, $R_6$, $R_7$ and $R_8$ contains at least one polar substituent, and wherein R has the meaning described hereinbefore. Very suitable for use as the components c) in the catalyst compositions are diphosphines in which the groups $R_5$, $R_6$, $R_7$ and $R_8$ are similar to one another and which can therefore be represented by the general formula $(R_5)_2P-R-P(R_5)_2$, wherein $R_5$ is a polar-substituted aromatic hydrocarbon group. Comparison of the performances of catalyst compositions containing as component c) a diphosphine of the general formula $(R_1)_2P-R-P(R_1)_2$ with corresponding catalyst compositions which as component c) contain a diphosphine of the general formula $(R_5)_2P-R-P(R_5)_2$ shows that at similar reaction rates for both compositions, the compositions containing a polar-substituted diphosphine afford polymers with higher molecular weights and, alternatively, that when the two compositions are employed for preparing polymers of equal molecular weights, the compositions containing a polar-substitued diphosphine lead to higher reaction rates.

The Applicant has carried out an investigation into the preparation of polar-substituted diphosphines of the formula $(R_5)_2P-R-P(R_5)_2$. Since neither for the polar-substituted diphosphines of the general formula $(R_5)_2P-R-P(R_5)_2$, nor for the non-polar substituted diphosphines of the general formula $(R_1)_2P-R-P(R_1)_2$ the preparation by reacting an aryl alkali metal compound with a tetrahalo diphosphine is a very attractive method owing to the very cumbersome multi-stage synthesis of the required phosphorus-containing starting materials, the investigation carried out by the Applicant was directed at the method mentioned earlier for the preparation of non-polar substituted diphosphines, viz. by reacting an alkali metal diaryl phosphide with a dihalo compound.

As was stated hereinbefore in the discussion of the preparation of non-polar-substituted diphosphines, the phosphoruscontaining starting materials required for the synthesis thereof can be simply obtained by the reaction in liquid ammonia of an alkali metal M with a triaryl phosphine $(R_1)_3P$. Examples of such alkali metal diaryl phosphides are sodium di(2-methyl-phenyl) phosphide, sodium di(3-methyl-phenyl) phosphide and sodium di(4-methyl-phenyl) phosphide. It was seen that in comparison with the preparation of sodium diphenyl phosphide from triphenyl phosphine, in which a quantitative conversion can be reached, the corresponding preparation of diaryl phosphides whose aryl groups contain one or more non-polar substituents generally proceeds at lower yields, which are, however, still amply sufficient for this method of preparation to be useful on a technical scale. The investigation into the application of the above method to the preparation of alkali metal diaryl phosphides in which the aryl groups contain one or more polar substituents has shown that the position in which the polar substituents occur in respect to the phosphorus atom is of great importance. It was found for instance that the formation of the alkali metal diaryl phosphides was completely suppressed by the presence of certain polar groups, such as a dialkyl-amino group, in a position para to phosphorus. The presence of other polar groups, such as an alkoxy group, para to phosphorus made the formation of alkali metal diaryl phosphide proceed in a low yield. Similarly, when two or three polar substituents are present in the aryl groups, the position in which the polar substituents occur in respect to phosphorus is of great importance for the successful preparation of the alkali metal diaryl phosphide. It was found for instance that the presence of two alkoxy groups ortho in respect to phosphorus sufficed for the formation of the alkali metal diaryl phosphide to proceed in a low yield, whilst the formation of alkali metal diaryl phosphide was completely blocked by the presence of an additional third alkoxy group in a position para to phosphorus. Nor did any formation of alkali metal diaryl phosphide occur when two methoxy groups were present in ortho and para positions in respect to phosphorus. Surprisingly, it was found during the investigation that without affecting the proceeding of the alkali metal diaryl phosphide synthesis, the aryl groups bound to phosphorus may have one or more polar substituents, provided that these polar substituents are present in no other position than in the two meta positions and in one of the ortho positions. Starting from triaryl phosphines that meet the above criteria, alkali metal diaryl phosphides containing polar-substituted aryl groups can be prepared in high to very high yields. In some cases these triaryl phosphines can even be converted into the corresponding alkali metal diaryl phosphides virtually quantitatively.

The present patent application relates to a process for the preparation of alkali metal diaryl phosphides, in which process alkali metal diaryl phosphides of the general formula $(R_9)_2PM$ are prepared by the reaction in liquid ammonia of an alkali metal M with a triaryl phosphine of the general formula $(R_9)_3P$, in which general formulae $R_9$ represents an aryl group containing one or more dialkylamino groups or alkoxy groups, which groups can occupy no other positions in respect to the phosphorus atom than the two meta positions and one of the ortho positions. In so far as in the alkali metal diaryl phosphides of the general formula $(R_9)_2PM$ prepared by the invention M does not represent potassium whilst at the same time $R_9$ represents a 2-methoxy phenyl group, these alkali metal diaryl phosphides are novel compounds. The present patent application also relates to these alkali metal diaryl phosphides as novel compounds.

Examples of these novel alkali metal diaryl phosphides are sodium di(2-methoxy-phenyl) phosphide, sodium di(3-methoxy-phenyl) phosphide sodium di(3-tert.butoxy-phenyl) phosphide, sodium di(2,3-dimethoxy-phenyl) phosphide, sodium di(2,5-dimethoxy-phenyl) phosphide, and sodium di(2-methoxy-5-methylphenyl) phosphide.

The alkali metal diaryl phosphides of the general formula $(R_9)_2PM$ prepared by the invention are intended in the first place for use as starting materials for the preparation of tetraaryl diphosphines of the general formula $(R_9)_2P\text{-}R\text{-}P(R_9)_2$, viz. tetraaryl diphosphines in which the four aryl groups are similar to one another. To this end, the alkali metal diaryl phosphides can be reacted with a dihalo compound of the general formula X-R-X, wherein X represents chlorine or bromine. In so far as in the tetraaryl diphosphines of the general formula $(R_9)_2P\text{-}R\text{-}P(R_9)_2$ R does not have three carbon atoms in the bridge, whilst at the same time $R_9$ represents a 2-methoxy-phenyl group, these tetraaryl diphosphides are novel compounds. Furthermore, the alkali metal diaryl phosphides of the general formula $(R_9)_2PM$ prepared in accordance with the invention are suited to be used as the starting materials for the preparation of tetraaryl diphosphines of the general formula $(R_9)_2P\text{-}R\text{-}P\text{-}(R_{10})(R_{11})$, wherein $R_{10}$ and $R_{11}$ represent similar or different aryl groups which may contain dialkylamino groups or alkoxy groups. To this end, the alkali metal diaryl phosphides may be reacted with a monohalo compound of the general formula X-R-$P(R_{10})(R_{11})$. The tetraaryl diphosphines of the general formula $(R_9)_2P\text{-}R\text{-}P(R_{10})(R_{11})$ wherein either one of the aryl groups $R_{10}$ and $R_{11}$ may optionally be similar to $R_9$, are also novel compounds. The present patent application also relates to the aforementioned tetraaryl diphosphines of the general formula $(R_9)_2P\text{-}R\text{-}P(R_9)_2$, provided that in said formula R does not have three carbon atoms in the bridge whilst at the same time $R_9$ represents a 2-methoxy-phenyl group, as well as to the aforementioned tetraaryl diphosphines of the general formula $(R_9)_2P\text{-}R\text{-}P(R_{10})(R_{11})$ wherein either one of the aryl groups $R_{10}$ and $R_{11}$ may optionally be similar to $R_9$, as novel compounds.

The German Offenlegungsschrift 2831525 relates to complexes of metal salts and chelate forming bisphosphines and their use in hydrogenation catalysts. Said publication does not disclose the bisphosphines according to our invention. Besides the publication discloses only bisphosphines, wherein the phosphorus atoms are bound by means of a dioxolan group.

In the process of the invention, compounds of

the general formula $(R_9)_2PM$ are prepared starting from compounds of the general formula $(R_9)_3P$. In the general formulae, the polarsubstituted aryl group $R_9$ is preferably a polar-substituted phenyl group. This polar-substituted phenyl group may contain at most three polar substituents. Depending on their number, the polar substituents may be attached to the phenyl group as follows (with the phosphorus occupying the 1-position). If a single substituent is present, it may take the 2-position or the 3-position. If two polar substituents are present, they may occupy the 2 and 3-positions, the 2 and 5-positions or the 3 and 5-positions. If three polar substituents are present, they must necessarily occupy the 2, 3 and 5-positions. If the polar-substituted aryl groups $R_9$ contain two or three polar substituents, these polar substituents may be similar or different. Preference is given to similar polar substituents.

In addition to one or more polar substituents, the polar-substituted aryl group $R_9$ may also include non-polar substituents, such as alkyl groups and in particular methyl groups. Eligible polar substituents include dialkyl-amino groups, such as dimethyl-amino groups and alkoxy groups, such as methoxy and tert.butoxy groups. The preferred polar substituents present in the aryl group $R_9$ are alkoxy groups, and more in particular, methoxy groups.

The preparation of the alkali metal diaryl phosphides according to the invention is carried out by the reaction in liquid ammonia of an alkali metal M with a triaryl phosphine. Alkali metals that can be used are lithium, potassium and sodium. Preference is given to the use of sodium as the alkali metal. It is preferred to employ about 2 mol of alkali metal per mol of triaryl phosphine to be converted. The quantity of liquid ammonia may vary within wide ranges. It is preferred to employ 1 to 125 ml and in particular 10 to 40 ml of liquid ammonia per mmol of alkali metal. Since liquid ammonia boils at atmospheric pressures at about -33°C, the process of the invention, if carried out at an atmospheric pressure, should be carried out below -33°C. Preferably, the process of the invention is carried out at a temperature of from -100 to -35°C and in particular of from -80 to -35°C. If the process of the invention is carried out under pressure, temperatures above -33°C may be employed, if desired. It has been found during research that in some cases the yield of alkali metal diaryl phosphide can be much enhanced by adding an ether to the liquid ammonia in which the reaction is carried out. Very suitable ethers are cyclic ethers and in particular tetrahydrofuran. Preferably, 2.5 to 75 and in particular 5 to 50 ml of ether is added per 100 ml of liquid ammonia.

As stated hereinbefore, the alkali metal diaryl phosphides prepared according to the invention are of interest for their use as starting materials in the preparation of tetraaryl diphosphines, which can be used as components of catalyst compositions intended for the preparation of polymers of carbon monoxide with one or more olefinically unsaturated compounds. A number of the tetraaryl diphosphines that can be prepared from the present alkali metal diaryl phosphides are novel compounds. This is the case with compounds of the general formula $(R_9)_2P-R-P(R_9)(R_2)$, provided that therein R does not contain three carbon atoms in the bridge whilst at the same time $R_9$ represents a 2-methoxy phenyl group, as well as with compounds of the general formula $(R_9)_2P-R-P(R_{10})-(R_{11})$.

As was stated hereinbefore, the present patent application also relates to novel catalyst compositions for the preparation of polymers of carbon monoxide with one or more olefinically unsaturated compounds, which catalyst compositions are based upon

a) a palladium compound,

b) an anion of an acid with a pKa of less than 6, and

c) one of the novel tetraaryl diphosphines described herein-before.

The palladium compound employed in the catalyst compositions as component a) is preferably a palladium salt of a carboxylic acid and in particular palladium acetate. The component b) used in the catalyst compositions is preferably an anion of an acid with a pKa of less than 4 (determined in aqueous solution at 18°C) and in particular an anion of an acid with a pKa of less than 2. More specifically preferred is an anion of a sulphonic acid, such as para-toluenesulphonic acid or an anion of a carboxylic acid, such as trifluoro acetic acid. Component b) can be incorporated in the catalyst compositions in the form of an acid and/or in the form of a salt. Eligible salts include non-noble transition metal salts, such as copper salts. The component c) that is preferably used in the catalyst compositions is a tetraaryl diphosphine in which the bivalent bridging group R is a $-(CH_2)_3-$ group. If desired, components a) and b) can be used combined in a single compound. An example of such a compound is the complex $Pd(CH_3CN)_2-(O_3S-C_6H_4-CH_3)_2$, which can be prepared by the reaction of palladium chloride with the silver salt of para-toluenesulphonic acid in acetonitrile as the solvent. In addition to components a), b) and c), the catalyst compositions may also include promoters. Preferably, a 1,4-quinone is used for this purpose.

Eligible olefinically unsaturated compounds which can be polymerized with carbon monoxide by using the catalyst compositions described hereinbefore are both compounds which consist exclusively of carbon and hydrogen and compounds which, in addition to carbon and hydrogen, contain one or more hetero atoms. Preference is given to the preparation of polymers of carbon monoxide with one or more olefinically unsaturated hydrocarbons. Examples of suitable hydrocarbon monomers are ethene and other $\alpha$-olefins, such as propene, butene-1, hexene-1 and octene-1. The catalyst compositions of the invention are particularly suited to be used for the preparation of copolymers of carbon monoxide with ethene and for the preparation of terpolymers of carbon monoxide with ethene and another olefinically unsaturated hydrocarbon, such as propene. The polymerization is preferably carried out at a temperature of 20-200°C and a pressure of 1-200 bar and in particular at a temperature of 30-150°C and a pressure of 20-100 bar. The polymerization is typically carried out by contacting the monomers with a solution of the catalyst composition in the organic liquid in which the polymers are insoluble. If desired, the polymerization may be carried out in the gaseous phase.

The invention is now illustrated with the aid of the following examples.

Example 1

Sodium diphenyl phosphide was prepared as follows. To 100 ml of liquid ammonia present in a mechanically stirred reaction vessel which was kept at -78°C by cooling, were successively added 8 mmol of sodium and 4 mmol of triphenyl phosphine. After 4 hours, 4 mmol of ammonium chloride was added to the reaction mixture. After 15 minutes the ammonia was evaporated. Analysis of the residue obtained showed that the triphenyl phosphine had been converted quantitavely into sodium diphenyl phosphide.

Example 2

Sodium di(2-methyl-phenyl) phosphide was prepared substantially in the same way as the sodium diphenyl phosphide of Example 1, the difference being that instead of triphenyl phosphine, tri(2-methyl-phenyl) phosphine was used. Of the tri(2-methyl-phenyl) phosphine, 55% was found to have been converted into sodium di(2-methyl-phenyl) phosphide.

Example 3

Sodium di(3-methyl-phenyl) phosphide was prepared substantially in the same way as the sodium diphenyl phosphide of Example 1, the difference being that instead of triphenyl phosphine, tri-(3methyl-phenyl) phosphine was used. Of the tri(3-methyl-phenyl) phosphine, 84% was found to have been converted into sodium di(3-methyl-phenyl) phosphide.

Example 4

Sodium di(4-methyl-phenyl) phosphide was prepared substantially in the same way as the sodium diphenyl phosphide of Example 1, the difference being that instead of triphenyl phosphine, tri(4-methyl-phenyl) phosphine was used. Of the tri(4-methyl-phenyl) phosphine, 79% was found to have been converted into sodium di(4-methylphenyl) phosphide.

Example 5

Sodium di(4-methoxy-phenyl) phosphide was prepared substantially in the same way as the sodium diphenyl phosphide of Example 1, the difference being that instead of triphenyl phosphine, tri-(4methoxy-phenyl) phosphine was used. Of the tri-(4-methoxy-phenyl) phosphine, 2% was found to have been converted into sodium di(4-methoxy-phenyl) phosphide.

Example 6

Example 1 was substantially repeated, the difference being that instead of triphenyl phosphine, tri-(4-dimethyl-amino-phenyl) phosphine was used. No conversion of tri(4-dimethyl-amino-phenyl) phosphine into sodium di(4-dimethylamino-phenyl) phosphide appeared to have occurred.

Example 7

Sodium di(2,6-dimethoxy-phenyl) phosphide was prepared substantially in the same way as the sodium diphenyl phosphide of Example 1, the difference being that instead of triphenyl phosphine, tri(2,6-dimethoxy-phenyl) phosphine was used. Of the tri(2,6-dimethoxy-phenyl) phosphine, 20% was found to have been converted into sodium di(2,6-dimethoxy-phenyl) phosphide.

Example 8

Sodium di(2,6-dimethoxy-phenyl) phosphide was prepared substantially in the same way as in Example 7, the difference being that, together with the triaryl phosphine, 10 ml of tetrahydrofuran was added.

Of the tri(2,6-dimethoxy-phenyl) phosphine, 20% was found to have been converted into sodium di(2,6-dimethoxy-phenyl) phosphide.

Example 9

Example 1 was substantially repeated, the difference being that instead of triphenyl phosphine, tri-(2,4-dimethoxy-phenyl) phosphine was used. It was found that there had been no conversion of tri(2,4-dimethoxy-phenyl) phosphine into sodium di(2,4-dimethoxyphenyl) phosphide.

## Example 10

Example 1 was substantially repeated, the difference being that instead of triphenyl phosphine, tri-(2,4,6-trimethoxy-phenyl) phosphine was used. It was found that there had been no conversion of tri-(2,4,6-trimethoxy-phenyl) phosphine into sodium di-(2,4,6-trimethoxy-phenyl) phosphide.

## Example 11

Example 10 was substantially repeated, the difference being that, together with the triaryl phosphine, 10 ml of tetrahydrofuran was added. It was found that there had been no conversion of tri-(2,4,6-trimethoxy-phenyl) phosphine into sodium di-(2,4,6-trimethoxy-phenyl) phosphide.

## Example 12

Sodium di(2-methoxy-phenyl) phosphide was prepared substantially in the same way as the sodium diphenyl phosphide of Example 1, the difference being that instead of triphenyl phosphine, tri(2-methoxy-phenyl) phosphine was used. Of the tri(2-methoxy- phenyl) phosphine, 88% was found to have been converted into sodium di(2-methoxy-phenyl) phosphide.

## Example 13

Sodium di(2-methoxy-phenyl) phosphide was prepared substantially in the same way as in Example 12, the differences being that

a) together with the triaryl phosphine, 10 ml of tetrahydrofuran
   was added, and

b) the addition of ammonium chloride was effected after 6 hours
   instead of 4 hours.

The tri(2-methoxy-phenyl) phosphine was found to have been quantitatively converted into sodium di(2-methoxy-phenyl) phosphide.

## Example 14

Sodium di(2-methoxy-phenyl) phosphide was prepared substantially in the same way as in Example 13, the differences being that

a) the reaction was carried out at -40 °C instead
   of -78 °C, and

b) the addition of ammonium chloride was effected after 1 hour instead of 6 hours.

The tri(2-methoxy-phenyl) phosphine was found to have been quantitatively converted into sodium di(2-methoxy-phenyl) phosphide.

## Example 15

Sodium di(3-methoxy-phenyl) phosphide was prepared substantially in the same way as the sodium diphenyl phosphide of Example 1, the difference being that instead of triphenyl phosphine, tri(3-methoxy-phenyl) phosphine was used. Of the tri(3-methoxy- phenyl) phosphine, 76% was found to have been converted into sodium di(3-methoxy-phenyl) phosphide.

## Example 16

Sodium di(3-tert.butoxy-phenyl) phosphide was prepared substantially in the same way as the sodium diphenyl phosphide of Example 1, the difference being that instead of triphenyl phosphine, tri(3-tert.butoxy-phenyl) phosphine was used. Of the tri(3-tert.butoxy-phenyl) phosphine, 85% was found to have been converted into sodium di(3-tert.butoxy-phenyl) phosphide.

## Example 17

Sodium di(3-tert.butoxy-phenyl) phosphide was prepared substantially in the same way as in Example 16, the differences being that

a) together with the triaryl phosphine, 10 ml of
   tetrahydrofuran was added, and

b) the addition of ammonium chloride was effected after 16 hours instead of 4 hours.

The tri(3-tert.butoxy-phenyl) phosphine was found to have been quantitatively converted into sodium di(3-tert.butoxy-phenyl) phosphide.

## Example 18

Sodium di(2,3-dimethoxy-phenyl) phosphide was prepared substantially in the same way as the sodium diphenyl phosphide of Example 1, the difference being that instead of triphenyl phosphine, tri(2,3-dimethoxy-phenyl) phosphine was used. Of the tri(2,3-dimethoxy-phenyl) phosphine, 72% was found to have been converted into sodium di(2,3-dimethoxy-phenyl)phosphide.

## Example 19

Sodium di(2,5-dimethoxy-phenyl) phosphide was prepared substantially in the same way as the sodium diphenyl phosphide of Example 1, the difference being that instead of triphenyl phosphine, tri(2,5-dimethoxy-phenyl) phosphine was used. The tri(2,5-dimethoxy-phenyl) phosphine was found to have been quantitatively converted into sodium di-(2,5-dimethoxy-phenyl) phosphide.

Example 20

1,3-bis[di(2-methoxy-phenyl)phosphino] propane was prepared as follows. To 250 ml of liquid ammonia present in a stirred reaction vessel which was kept at -78°C by cooling, were consecutively added 35 mmol of sodium, 17.5 mmol of tri(2-methoxy-phenyl) phosphine and 25 ml of tetrahydrofuran. After 6 hours, 17.5 mmol of ammonium chloride was added to the reaction mixture, and after 15 minutes, 8.7 mmol of 1,3-dichloro propane. After 100 ml of tetrahydrofuran had been added, ammonia was removed by evaporation and the residue was refluxed for another hour. After the solvent was removed in vacuo, dichloro methane and an aqueous solution of ammonium chloride were added to the residue. The organic layer was separated, dried and filtered. Removal of the solvent afforded 4.6 g of 1,3-bis[di(2-methoxy-phenyl)-phosphino] propane.

Of Examples 1-20, Examples 12-20 are in accordance with the invention. In Examples 12-19, sodium diaryl phosphides of the general formula $(R_9)_2PNa$ were prepared in high yield by the reaction in liquid ammonia of sodium with a triaryl phosphine of the general formula $(R_9)_3P$. Example 20 concerns the preparation of a tetraaryl diphosphine of the general formula $(R_9)_2P-(CH_2)_3-P(R_9)_2$, by the reaction of a sodium diaryl phosphide of the general formula $(R_9)_2PNa$ with 1,3-dichloro propane. Examples 1-11 are outside the scope of the invention. They have been included in the patent application for comparison. Example 1 demonstrates the quantitative conversion of triphenyl phosphine into diphenyl phosphide. From Examples 2-4 it appears that starting from triaryl phosphines in which the aryl groups bear a methyl group in a position ortho, meta or para in respect to phosphorus as a non-polar substituent, diaryl phosphides can be prepared in good yields. Examples 5-11 demonstrate that the presence in the starting triaryl phosphine of a polar substituent in a position para to phosphorus and/or two polar substituents ortho to phosphorus suffices for the formation of diaryl phosphides to proceed in a low yield or to be blocked altogether. As can be seen from the comparison of the results of Examples 7 and 9 and Examples 10 and 11, this situation cannot be improved upon by adding tetrahydrofuran to the liquid ammonia.

Examples 12-19 of the invention demonstrate that when triaryl phosphine of the general formula $(R_9)_3P$ is the starting material, diaryl phosphides can be prepared in very high yields. As appears from the comparison of the results of Examples 12, 13 and 14 and of those of Examples 16 and 17, the yield of diaryl phosphide can still be considerably enhanced by adding tetrahydrofuran to the liquid ammonia.

Example 21

Sodium-di-(2-methoxy-5-methylphenyl)-phosphide was prepared in substantially the same way as sodium-diphosphide was prepared in accordance with the procedure set out in Example 1, the difference being use of tri-(2-methoxy-5-methyl-phenyl)phosphine in stead of triphenylphosphine. Yield was 92%.

Example 22

Sodium-di-(2-methoxy-5-methylphenyl)-phosphide was prepared in substantially the same way as set out in Example 21, the differences being:
- use of a mixture of the triarylphosphine and THF(tetrahydrofuran);
- addition of ammoniumchloride after three hours instead of after four hours, yield was 99.9%.

**Claims**

1. Process for the preparation of alkali metal diaryl phosphides, characterized in that alkali metal diaryl phosphides of the formula $(R_9)_2PM$ are prepared by reacting, in liquid ammonia, an alkali metal M with a triaryl phosphine of the formula $(R_9)_3P$, in which formulae $R_9$ represents an aryl group containing one or more dialkylamino groups or alkoxy groups which groups can occupy no other positions in respect to the phosphorus atom than the two meta positions and one of the ortho positions.

2. Process as claimed in claim 1, characterized in that $R_9$ is a phenyl group.

3. Process as claimed in claim 1 or 2, characterized in that if $R_9$ has two or three substituents, these are similar to one another.

4. Process as claimed in one or more of claims 1-3, characterized in that $R_9$ contains one or more alkoxy groups.

5. Process as claimed in claim 4, characterized in that $R_9$ contains one or more methoxy groups.

6. Process as claimed in one or more of claims 1-5, characterized in that sodium is employed as the alkali metal.

7. Process as claimed in one or more of claims 1-6, characterized in that, per mol of triaryl phosphine to be converted, about 2 mol of alkali metal is used.

8. Process as claimed in any one of claims 1 to 7, characterized in that, per mmol of alkali metal, 10-40 ml of liquid ammonia is used.

9. Process as claimed in one or more of claims 1-8, characterized in that the reaction is carried out at a temperature of from -100 to -35°C.

10. As novel alkali metal diaryl phosphides, sodium di(2-methoxy-phenyl) phosphide, sodium di(3-methoxy-phenyl) phosphide, sodium di(3-tert.butoxy-phenyl) phosphide, sodium di(2,3-dimethoxy-phenyl) phosphide, sodium di(2,5-dimethoxy-phenyl) phosphide and sodium di(2-methoxy-5-methylphenyl)phosphide.

11. Novel tetraaryl diphosphines of the general formula $(R_9)_2P-R-P(R_9)_2$, wherein $R_9$ represents an aryl group containing one or more dialkylamino groups or alkoxy groups which can occupy no other positions in respect to the phosphorus atom to which $R_9$ is bound than the two meta positions and one of the ortho positions, and wherein R represents a bivalent bridging group containing at least three carbon atoms in the bridge, with the proviso that in these tetraaryl diphosphines R shall not contain three carbon atoms in the bridge whilst at the same time $R_9$ represents a 2-methoxy phenyl group.

12. Novel tetraaryl diphosphines of the general formula $(R_9)_2P-R-P(R_{10})(R_{11})$, wherein $R_9$ represents an aryl group containing one or more dialkylamino groups or alkoxy groups which can occupy no other positions in respect to the phosphorus atom to which $R_9$ is bound than the two meta positions and one of the ortho positions, and wherein $R_{10}$ and $R_{11}$ represent similar or different aryl groups which may contain dialkylamino groups or alkoxy groups only one of which may optionally be similar to $R_9$, and wherein R represents a bivalent bridging group containing at least three carbon atoms in the bridge.

**Revendications**

1. Procédé de préparation de diarylphosphides de métaux alcalins, caractérisé en ce qu'on prépare des diarylphosphides de métaux alcalins de formule $(R_9)_2PM$ en faisant réagir, dans de l'ammoniaque, un métal alcalin M avec une triarylphosphine de formule $(R_9)_3P$ , formule dans laquelle $R_9$ représente un groupe aryle contenant un ou plusieurs groupes dialcoylamino ou groupes alcoxy, lesquels groupes ne peuvent occuper d'autres positions par rapport à l'atome de phosphore que les deux positions en méta et l'une des positions en ortho.

2. Procédé selon la revendication 1, caractérisé en ce que $R_9$ est un groupe phényle.

3. Procédé selon la revendication 1 ou 2, caractérisé en ce que si $R_9$ a deux ou trois substituants, ils sont identiques entre eux.

4. Procédé selon une ou plusieurs des revendications 1-3, caractérisé en ce que $R_9$ contient un ou plusieurs groupes alcoxy.

5. Procédé selon la revendication 4, caractérisé en ce que $R_9$ contient un ou plusieurs groupes méthoxy.

6. Procédé selon une ou plusieurs des revendications 1-5, caractérisé en ce qu on emploie du sodium comme métal alcalin.

7. Procédé selon une ou plusieurs des revendications 1-6, caractérisé en ce que, par mole de triarylphosphine à transformer, on utilise environ 2 moles de métal alcalin.

8. Procédé selon l'une quelconque des revendications 1 à 7, caractérisé en ce que, par mole de métal alcalin, on utilise 10-40 moles d'ammoniaque.

9. Procédé selon une ou plusieurs des revendications 1-8, caractérisé en ce que la réaction est conduite à une température allant de -100 à -35°C.

10. Comme nouveaux diaryl-phosphides de métaux alcalins, le di(2-méthoxy-phényl)-phosphide de sodium, le di(3-méthoxy-phényl)-phosphide de sodium, le di(3-tert.butoxy-phényl)phosphide de sodium, le di(2,3-diméthoxy-phényl)phosphide de sodium, le di(2,5-diméthoxy-phényl)phosphide de sodium et le di(2-méthoxy-5-méthylphényl)phosphide de sodium.

11. Nouvelles tétraaryl-diphosphines de formule générale $(R_9)_2P-R-P(R_9)_2$ , où $R_9$ représente

un groupe aryle contenant un ou plusieurs groupes dialcoylamino ou groupes alcoxy qui ne peut pas occuper d'autres positions par rapport à l'atome de phosphore auquel $R_9$ est lié que les deux positions en méta et l'une des positions en ortho, et où R représente un groupe de pontage bivalent contenant au moins trois atomes de carbone dans le pont, sous réserve que dans ces tétraaryl-phosphines R ne contienne pas trois atomes de carbone dans le pont tandis qu'en même temps $R_9$ représente un groupe 2-méthoxy-phényle.

12. Nouvelles tétraaryl-phosphines de formule générale $(R_9)_2P\text{-}R\text{-}P(R_{10})(R_{11})$ , où $R_9$ représente un groupe aryle contenant un ou plusieurs groupes dialcoylamino ou alcoxy qui ne peuvent occuper d'autres positions par rapport à l'atome de phosphore auquel $R_9$ est lié que les deux positions en méta et l'une des positions en ortho, et ou $R_{10}$ et $R_{11}$ représentent des groupes aryle identiques ou différents qui peuvent contenir des groupes dialcoylamino ou des groupes alcoxy dont seul l'un peut si on le désire être identique à $R_9$ et où R représente un groupe de pontage bivalent contenant au moins trois atomes de carbone dans le pont.

**Patentansprüche**

1. Verfahren zur Herstellung von Alkalimetalldiarylphosphiden, dadurch gekennzeichnet, daß Alkalimetalldiarylphosphide der allgemeinen Formel $(R_9)_2PM$ durch Umsetzen eines Alkalimetalles M mit einem Triarylphosphin der Formel $(R_9)_3P$ in flüssigem Ammoniak hergestellt werden,in welchen Formeln $R_9$ eine Arylgruppe darstellt, die eine oder mehrere Dialkylaminogruppen oder Alkoxygruppen enthält, welche Gruppen keine anderen Stellungen gegenüber dem Posphoratom als die beiden meta-Stellungen und eine der ortho-Stellungen einnehmen können.

2. Verfahren nach Anspruch 1, dadurch gekennzeichnet, daß $R_9$ eine Phenylgruppe ist.

3. Verfahren nach Anspruch 1 oder 2, dadurch gekennzeichnet , daß dann, wenn $R_9$ zwei oder drei Substituenten aufweist, diese einander gleich sind.

4. Verfahren nach einem oder mehreren der Ansprüche 1 bis 3, dadurch gekennzeichnet, daß $R_9$ eine oder mehrere Alkoxygruppen enthält.

5. Verfahren nach Anspruch 4, dadurch gekennzeichnet, daß $R_9$ eine oder mehrere Methoxy-

gruppen enthält.

6. Verfahren nach einem oder mehreren der Ansprüche 1 bis 5, dadurch gekennzeichnet, daß als Alkalimetall Natrium verwendet wird.

7. Verfahren nach einem oder mehreren der Ansprüche 1 bis 6, dadurch gekennzeichnet, daß je Mol umzuwandelndem Triarylphosphin etwa 2 mol Alkalimetall eingesetzt werden.

8. Verfahren nach einem der Ansprüche 1 bis 7, dadurch gekennzeichnet, daß je mMol Alkalimetall 10-40 ml flüssiges Ammoniak eingesetzt werden.

9. Verfahren nach einem oder mehreren der Ansprüche 1 bis 8, dadurch gekennzeichnet, daß die Umsetzung bei einer Temperatur von -100 bis -35°C ausgeführt wird.

10. Als neue Alkalimetalldiarylphosphide die Verbindungen Natriumdi(2-methoxy-phenyl)-phosphid, Natriumdi(3-methoxy-phenyl)-phosphid, Natriumdi(3-tert.butoxy-phenyl)-phosphid, Natriumdi(2,3-dimethoxy-phenyl)-phosphid, Natriumdi(2,5-dimethoxy-phenyl)-phosphid und Natriumdi(2-methoxy-5-methyl-phenyl)phosphid.

11. Neue Tetraaryldiphosphine der allgemeinen Formel $(R_9)_2P\text{-}R\text{-}P(R_9)_2$, worin $R_9$ eine Arylgruppe darstellt, die eine oder mehrere Dialkylaminogruppen oder Alkoxygruppen enthält, die keine anderen Stellungen in bezug auf das Phosphoratom, an welches $R_9$ gebunden ist, als die beiden meta-Stellungen und eine der ortho-Stellungen einnehmen können, und worin R eine zweiwertige Brückengruppe bedeutet, die wenigstens drei Kohlenstoffatome in der Brücke enthält, mit der Maßgabe, daß in diesen Tetraaryldiphosphinen R nicht drei Kohlenstoffatome in der Brücke aufweist, während gleichzeitig $R_9$ eine 2-Methoxyphenylgruppe darstellt.

12. Neue Tetraaryldiphosphine der allgemeinen Formel $(R_9)_2P\text{-}R\text{-}P(R_{10})(R_{11})$, worin $R_9$ eine Arylgruppe bedeutet, die eine oder mehrere Dialkylaminogruppen oder Alkoxygruppen enthält, die keine anderen Stellungen in bezug auf das Phosphoratom, an welches $R_9$ gebunden ist, als die beiden meta-Stellungen une eine der ortho-Stellungen einnehmen können, und worin $R_{10}$ und $R_{11}$ gleiche oder verschiedene Arylgruppen bedeuten, die Dialkylaminogruppen oder Alkoxygruppen enthalten können, von welchen Arylgruppen nur eine gegebenefalls

mit $R_9$ gleich sein kann, und worin R eine zweiwertige Brückengruppe bedeutet, die wenigstens drei Kohlenstoffatome in der Brücke enthält.